# EUROPEAN PATENT SPECIFICATION

(11) **EP 3 004 765 B1**
(45) Date of publication and mention of the grant of the patent: **12.07.2017**
(21) Application number: 14728505.0
(22) Date of filing: 30.05.2014
(51) Int. Cl.: F25D 23/06, H05K 5/00

(54) **A LINKING MECHANISM**
VERKNÜPFUNGSMECHANISMUS
MÉCANISME DE LIAISON

(30) Priority: 07.06.2013 TR 201306921
(43) Date of publication of application: 13.04.2016
(73) Proprietor: Arçelik Anonim Sirketi, 34950 Istanbul (TR)
(72) Inventor: OZYUKSEL, Faik Emre, 34950 Istanbul (TR); SARIOGLU, Fatma Gevrek, 34950 Istanbul (TR); CELIK, Kadir Ridvan, 34950 Istanbul (TR); KAYMAK, Mehmet Ercan, 34950 Istanbul (TR)
(86) International application number: PCT/EP2014/061221
(87) International publication number: WO 2014/195229

(56) References cited:
- DE-U1-202006 008 513
- JP-A- H02 126 073
- US-B1- 6 312 068

## Description

The present invention relates to a linking mechanism that connects two or more cooling devices.

In the state of the art, various methods exist for grouping two or more cooling devices. However, depending on the space where the user intends to place the cooling devices, the need for grouping the cooling devices with different distances therebetween arises. In order to group the cooling devices with different distances therebetween, the need for using different linking mechanisms arises. The said issue is solved by means of linking mechanism in more than one type. However, this increases production, inventory and logistics costs.

In the state of the art European Patent Application Document No. EP2476983A2, or in the Patent Application Document No. JPH02126073 A, a connection member is explained which provides the grouping of two cooling devices.

The aim of the present invention is the realization of a linking mechanism with decreased cost, that enables the grouping of cooling devices with different distances therebetween in a rigid manner.

The linking mechanism realized in order to attain the aim of the present invention, explicated in the first claim and the respective dependent claims thereof enables the cooling devices to move together by being fixed to the cooling devices by means of the connection member. The linking mechanism comprises at least two spacers in different sizes, that bear against the opposite surfaces of the cooling devices, that enables the grouping of the cooling devices so that a gap remains therebetween and also enables the cooling devices to be grouped with different distances therebetween; one spacer staying between the cooling devices when the linking mechanism is placed onto the cooling devices. The user may place one of the spacers situated on the linking mechanism between the cooling devices if desired. The spacers in different sizes allow the user to group the cooling devices with different distances therebetween.

In an embodiment of the present invention, the spacers extend outwards from the linking mechanism in different directions. On the linking mechanism, there are spacers with different widths, extending in different directions. The user places the spacer he/she chooses from amongst the spacers in different widths, situated on the linking mechanism. If the user needs the cooling devices to be grouped with a different distance therebetween, he/she detaches the linking mechanism from the cooling devices, turns it over and groups the cooling devices with the spacer having a different width.

In an embodiment of the present invention, the linking mechanism comprises a body, one side being fixed to a cooling device and the other to the other cooling device by means of the connection member. The body has two spacers, one extending from the front surface thereof and the other from the rear surface. When the cooling devices are grouped by means of the linking mechanism, one of the spacers remains between the cooling devices. By means of the spacers that extend from the front and rear surfaces of the body and preferably almost at the center of the body, the user can use whichever side of the linking mechanism he/she desires.

In an embodiment of the present invention, the linking mechanism comprises a support extension that extends from over the body so as to be perpendicular to the body and the spacer and that contacts one surface of the cooling device when the linking mechanism is placed onto the cooling device. When the linking mechanism is placed between the cooling devices, the body bears against one of the surfaces of the cooling devices, the spacer bears against another surface of the cooling devices and the support extension bears against the surface which is perpendicular to the said surfaces. Thus, the linking mechanism firmly grips the cooling devices in an aligned manner.

In an embodiment of the present invention, the spacer is quadrilateral. Thus, when the cooling devices are brought to a side-by-side position and the linking mechanism is mounted onto the cooling devices, the spacer bears against the opposite surfaces of the first cooling device and the second cooling device.

In an embodiment of the present invention, a gap is provided inside the spacer. Thus, the production cost of the linking mechanism decreases.

By means of the low-cost linking mechanism that enables the grouping of the cooling devices with different distances therebetween, the cooling devices connected to each other can be moved together.

The model embodiments relating to a linking mechanism realized in order to attain the aim of the present invention are illustrated in the attached figures, where:
Figure 1 - is the perspective view of a linking mechanism.
Figure 2 - is the perspective view of a linking mechanism from a different angle.
Figure 3 - is the partial rear view of two cooling devices and a linking mechanism.
Figure 4 - is the view of detail A in Figure 3.
Figure 5 - is the partial rear view of two cooling devices and a linking mechanism in an embodiment of the present invention.
Figure 6 - is the view of detail B in Figure 5.

The elements illustrated in the figures are numbered as follows:
- 1.: Linking mechanism
- 2. , 102.: Connection member
- 3. , 103.: Spacer
- 4.: Body
- 5.: Support extension
- 6.: Gap

The linking mechanism (1) is suitable to connect two cooling devices (C1, C2) placed side by side to each other and comprises a body (4) that is placed onto the opposite sides and/or corners of the cooling devices (C1, C2) and at least one connection member (2, 102) that enables the body (4) to be fixed to both cooling devices (C1, C2) and enables the cooling devices (C1, C2) to be kept together.

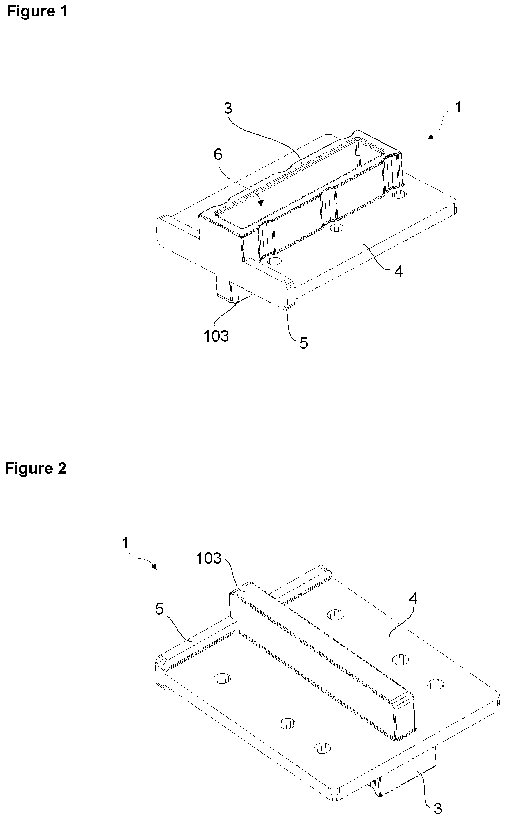

The linking mechanism (1) of the present invention comprises,
- more than one spacer (3, 103) each having a different width, that enables that a predetermined distance (L) remains between the cooling devices (C1, C2) and that enables the cooling devices (C1, C2) to be grouped with different distances therebetween; one spacer (3, 103) staying between the cooling devices (C1, C2) when the cooling devices (C1, C2) are grouped (Figure 1, Figure 2).

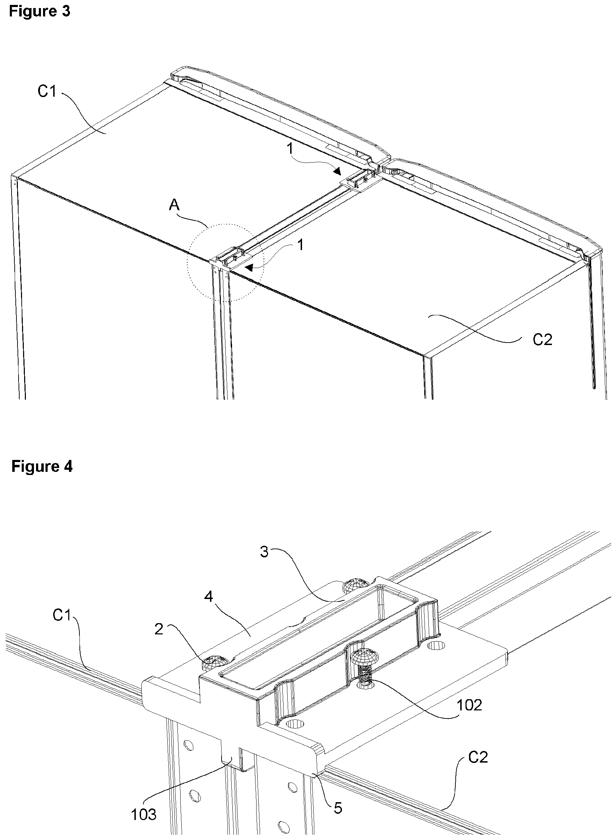

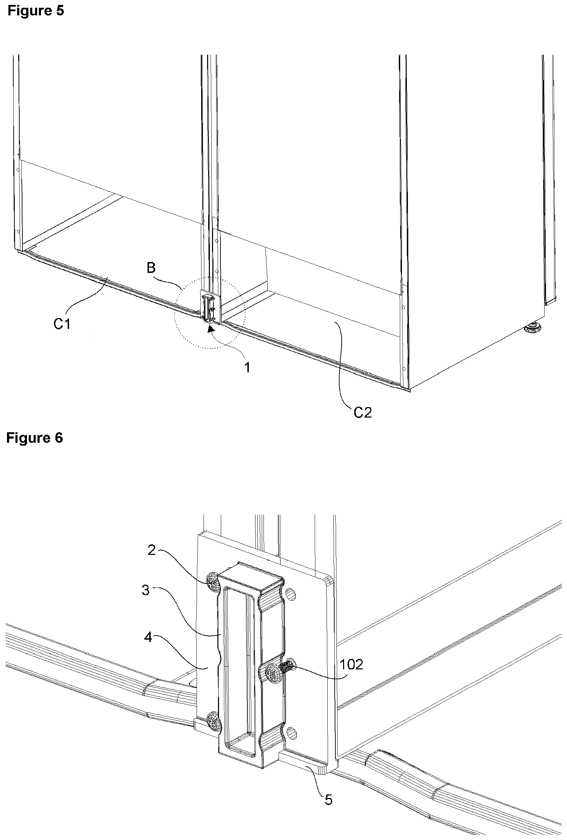

The user positions the cooling devices (C1, C2) he/she desires to connect side by side such that a distance remains therebetween. The linking mechanism (1) is mounted onto the cooling devices (C1, C2) so that the spacer (3, 103) remains between the cooling devices (C1, C2). Thus, the cooling devices (C1, C2) are grouped so that a distance as much as the width of the spacer (3, 103) remains therebetween. The linking mechanism (1) is fixed to each cooling device (C1, C2) by means of the connection member (2). By means of the spacers (3, 103) having different widths, the user can group the cooling devices (C1, C2) with different distances therebetween by changing the distance between the cooling devices (C1, C2) when desired. The said distance is almost as much as the width of the spacer (3, 103) that is inserted in between the cooling devices (C1, C2). The user is provided with the flexibility of grouping the cooling devices (C1, C2) with different distances therebetween by means of the spacers (3, 103) having different widths provided on a single linking mechanism (1). Producing the spacers (3, 103) having different widths and the body (4) together as a single piece provides ease of production and ease of utilization. Preferably the linking mechanism (1) is produced from metal or glass reinforced plastic (Figure 3, Figure 4, Figure 5, Figure 6).

In an embodiment of the present invention, the linking mechanism (1) comprises more than one spacer (3, 103), each extending from the body (4) in different directions. Each of the spacers (3, 103) faces a different direction. The user can detach the linking mechanism (1) from the cooling devices (C1, C2), turns it over and slides another spacer (3, 103) facing another direction in between the cooling devices (C1, C2). The user can group the cooling devices (C1, C2) with different distances therebetween by means of the spacers (3, 103) having different widths provided on a single linking mechanism (1).

In an embodiment of the present invention, the linking mechanism (1) comprises a plate-shaped body (4) and two spacers (3, 103) that extend perpendicularly to the plate-shaped body (4), one from the front surface of the plate-shaped body (4) and the other from the rear surface thereof. By means of the connection member (2, 102), one side of the body (4) is fixed to a cooling device (C1) and the other side to the other cooling device (C2). By means of the spacers (3, 103) that extend from the front and rear surfaces of the body (4) and preferably almost at the center of the body (4), the user can use whichever side of the linking mechanism (1) he/she desires (Figure 3, Figure 4, Figure 5, Figure 6).

In an embodiment of the present invention, the linking mechanism (1) comprises a support extension (5) that is situated on the body (4), that extends so as to be perpendicular to the body (4) and that bears against one surface of the cooling device (C1, C2) when the linking mechanism (1) is placed onto the cooling device (C1, C2). When the linking mechanism (1) is placed between the cooling devices (C1, C2), the body (4) bears against one of the surfaces of the cooling devices (C1, C2), the spacer (3, 103) bears against another surface thereof and the support extension (5) bears against the surface which is perpendicular to the said surfaces. Thus, the linking mechanism (1) firmly grips the cooling devices (C1, C2) in an aligned manner. Preferably, the cooling devices (C1, C2) are grouped by four different linking mechanisms (1) at four corners.

In an embodiment of the present invention, the spacer (3, 103) is quadrilateral. Thus, when the cooling devices (C1, C2) are brought to a side-by-side position and the linking mechanism (1) is mounted onto the cooling devices (C1, C2), the spacer (3, 103) bears against the opposite surfaces of the first cooling device (C1) and the second cooling device (C2).

In an embodiment of the present invention, a gap (6) is provided inside the spacer (3, 103). Thus, the production cost of the linking mechanism (1) decreases.

By means of the present invention, two or more cooling devices (C1, C2, ...) can be grouped with different distances therebetween. The cooling devices (C1, C2, ...) are firmly connected by means of the linking mechanisms (1) with light construction.

## Claims

1. A linking mechanism (1) suitable to connect two cooling devices (C1, C2) placed side by side to each other, comprising
- a body (4) that is placed onto the side by side sides and/or corners of the cooling devices (C1, C2) and
- at least two connection members (2, 102) to fix the body (4) to both cooling devices (C1, C2) and the cooling devices (C1, C2) to be connected together,
- **characterized by**
the body (4) comprising more than one spacer (3, 103) each having a different width, a width that enables that a predetermined distance (L) remains between the two cooling devices (C1, C2) and that enables the cooling devices (C1, C2) to be grouped with a different distance therebetween; one of the spacers (3, 103) staying between the cooling devices (C1, C2) when the cooling devices (C1, C2) are connected.

2. A linking mechanism (1) as in Claim 1, **characterized by** more than one spacer (3, 103), each extending from the body (4) in different directions.

3. A linking mechanism (1) as in Claim 1 or 2, **characterized by** a plate-shaped body (4) and two spacers (3, 103) that extend perpendicularly to the plate-shaped body (4), one from the front surface of the plate-shaped body (4) and the other from the rear surface thereof.

4. A linking mechanism (1) as in any one of the above claims, **characterized by** a support extension (5) that is situated on the body (4), that extends so as to be perpendicular to the body (4) and that bears against one surface of the cooling device (C1, C2) when the linking mechanism (1) is placed onto the cooling device (C1, C2).

5. A linking mechanism (1) as in any one of the above claims, **characterized by** a quadrilateral spacer (3, 103).

6. A linking mechanism (1) as in any one of the above claims, **characterized by** a gap (6) that is provided inside the spacer (3, 103).

## Patentansprüche

1. Verbindungseinrichtung (1) für die Verbindung der zwei Kühlungsvorrichtungen (C1, C2), die nebeneinander angeordnet sind, umfassend folgende;
- ein Gehäuse (4), das mit den Seitenwänden und/oder den Ecken der Kühlungsvorrichtungen (C1, C2) seitlich eingestellt ist, und
- mindestens zwei Verbindungselemente (2, 102), um das Gehäuse (4) an die beiden Kühlungsvorrichtungen (C1, C2) zu befestigen und die Kühlungsvorrichtungen (C1, C2) miteinander zu verbinden,
**dadurch gekennzeichnet, dass** das Gehäuse (4) mehrere Abstandshalter (3, 103) aufweist, die jeweils verschiedene Breiten besitzen, wobei diese Breite sicherstellt, dass zwischen den beiden Kühlungsvorrichtungen (C1, C2) der vorbestimmte Abstand (L) bleiben kann und dadurch die Gruppierung der Kühlungsvorrichtungen (C1, C2) in einem verschiedenen Abstand zwischen denen ermöglicht wird, wobei einer der Abstandshalter (3, 103) zwischen den Kühlungsvorrichtungen (C1, C2) liegt, wenn die Kühlungsvorrichtungen (C1, C2) miteinander verbunden sind.

2. Verbindungseinrichtung (1) nach Anspruch 1 **gekennzeichnet durch** mehrere Abstandshalter (3, 103), die jeweils aus dem Gehäuse (4) ausgehend in verschiedene Richtungen verlaufen.

3. Verbindungseinrichtung (1) nach Anspruch 1 **oder 2 gekennzeichnet durch** ein Gehäuse (4) in Form einer Platte und zwei Abstandshalter (3, 103), die senkrecht zu diesem Gehäuse (4) in Form einer Platte verlaufen und eine davon aus den vorderen Seite des Gehäuses (4) in Form einer Platte und der andere aus den hinteren Seite davon herausragen.

4. Verbindungseinrichtung (1) nach einem der vorhergehenden Ansprüche **gekennzeichnet durch** eine unterstützende Erweiterung (5), die auf dem Gehäuse (4) angeordnet ist und senkrecht zum Gehäuse (4) erstreckt sowie an eine Seite der Kühlungsvorrichtung (C1, C2) anstoßt, wenn die Verbindungseinrichtung (1) auf den Kühlungsvorrichtung (C1, C2) eingestellt wird.

5. Verbindungseinrichtung (1) nach einem der vorhergehenden Ansprüche **gekennzeichnet durch** einen vierkantigen Abstandshalter (3, 103).

6. Verbindungseinrichtung (1) nach einem der vorhergehenden Ansprüche **gekennzeichnet durch** einen Hohlraum (6) in dem Abstandshalter (3, 103).

## Revendications

1. Un mécanisme de liaison (1) adapté pour connecter deux dispositifs de refroidissement (C1, C2) placés côte à côte l'un avec l'autre, comprenant
- un corps (4) qui est placé sur les côtés côte à côte et/ou les coins des dispositifs de refroidissement (C1, C2) et
- au moins deux éléments de connexion (2, 102) pour fixer le corps (4) aux deux dispositifs de refroidissement (C1, C2) et aux dispositifs de refroidissement (C1, C2) à connecter ensemble,
- **caractérisé par**
le corps (4) comprenant plus d'un écarteur (3, 103) ayant chacune une largeur différente, une largeur qui permet à la distance prédéterminée (L) de rester entre les deux dispositifs de refroidissement (C1, C2) et qui permet aux dispositifs de refroidissement (C1, C2) à être groupés avec une distance différente entre eux; l'une des écarteurs (3, 103) restant entre les dispositifs de refroidissement (C1, C2) lorsque les dispositifs de refroidissement (C1, C2) sont connectés.

2. Un mécanisme de liaison (1) selon la revendication 1, **caractérisé par** plus d'un écarteur (3, 103), s'étendant chacune du corps (4) dans des directions différentes.

3. Un mécanisme de liaison (1) selon la revendication 1 ou 2, **caractérisé par** un corps en forme de plaque (4) et deux écarteurs (3, 103) qui s'étendent perpendiculairement au corps en forme de plaque (4), un de la surface avant du corps en forme de plaque (4) et l'autre de sa surface arrière.

4. Un mécanisme de liaison (1) selon l'une quelconque des revendications précédentes, **caractérisé par** un prolongement de support (5) qui est situé sur le corps (4) qui s'étend de manière à être perpendiculaire au corps (4) et qui porte contre une surface du dispositif de refroidissement (C1, C2) lorsque le mécanisme de liaison (1) est placé sur le dispositif de refroidissement (C1, C2).

5. Un mécanisme de liaison (1) selon l'une quelconque des revendications précédentes, **caractérisé par** un écarteur quadrilatéral (3, 103).

6. Un mécanisme de liaison (1) selon l'une quelconque des revendications précédentes, **caractérisé par** un espace (6) qui est prévu à l'intérieur de l'écarteur (3, 103).
